# EUROPEAN PATENT SPECIFICATION

(11) **EP 2 040 896 B1**
(45) Date of publication and mention of the grant of the patent: **03.09.2014**
(21) Application number: 07787063.2
(22) Date of filing: 04.07.2007
(51) Int. Cl.: B29C 33/48, B29C 33/76, B29D 24/00, B29C 70/30, B29C 70/48, B29C 70/44

(54) **METHOD FOR PRODUCING A FIBRE COMPOSITE COMPONENT FOR AEROSPACE**
VERFAHREN ZUR HERSTELLUNG EINER FASERVERBUNDKOMPONENTE FÜR DIE LUFT- UND RAUMFAHRT
PROCEDE DE FABRICATION D'UN COMPOSANT DE COMPOSITE FIBREUX POUR L'INDUSTRIE AEROSPATIALE

(30) Priority: 06.07.2006 DE 102006031326; 06.07.2006 US 818777 P
(43) Date of publication of application: 01.04.2009
(73) Proprietor: Airbus Operations GmbH, 21129 Hamburg (DE)
(72) Inventor: JACOB, Torben, 21643 Beckdorf (DE); PIEPENBROCK, Joachim, 21614 Buxtehude (DE)
(74) Representative: Isarpatent
(86) International application number: PCT/EP2007/056767
(87) International publication number: WO 2008/003721

(56) References cited:
- EP-A- 0 291 203
- EP-A- 0 735 639
- EP-A- 1 762 355
- WO-A-2005/105402
- DE-A1- 4 224 526
- DE-C1- 3 911 312
- JP-A- 8 207 134
- US-A- 4 503 105

## Description

The present invention relates to a method for producing a fibre composite component, in particular for aerospace and to a moulding core for producing such a fibre composite component.

Although it can be applied to any desired fibre composite components, the present invention and the problems on which it is based are explained in more detail below with reference to two-dimensional stringer-stiffened carbon fibre reinforced plastic (CRP) components, for example skin shells of an aircraft.

It is generally known to stiffen CRP skin shells with CRP stringers in order to withstand the high loads in the aircraft sector with the lowest possible additional weight. In this respect, a distinction is made essentially between two types of stringers: T and Ω stringers.

The cross section of T stringers is made up of a base and a stem. The base forms the connecting surface with respect to the skin shell. The use of skin shells stiffened with T stringers is widespread in aircraft construction.

Ω stringers have something like a hat profile, its ends being connected to the skin shell. Ω stringers may either be adhesively attached in the cured state to the likewise cured shell, or be cured wet-in-wet at the same time as the shell. The latter is desired, because it is more favourable from technical aspects of the process. However, supporting or moulding cores are necessary for the wet-in-wet production of skin shells stiffened with Ω stringers, in order to fix and support the dimensionally unstable semifinished fibre products in the desired Ω shape during the production process. Skin shells with Ω stringers have the advantage over T stringers that they allow better infiltration during an infusion process for introducing a matrix, for example an epoxy resin, into the semifinished fibre products. Infusion processes can be inexpensive in comparison with other known methods for producing fibre composite components, such as the prepreg process for example, because it allows the use of lower-cost semifinished fibre products.

However, there is the problem with the production of Ω stringers that the material used at present for the supporting or moulding core is cost-intensive and can only be removed with difficulty after the forming of the Ω stringers, with the result that the material remaining in the stringers contributes adversely to the overall weight of the aircraft.

Document.JP 08 207 134 describes a moulding core with a spiral configuration. In a non-stretched state of the moulding core a prepreg sheet is placed on the core. To remove the core from the finished moulded product, a pulling force is applied to both ends of the moulding core. The core is stretched and can thus be removed from the finished product.

Document EP 0 201 203 A2 describes a support helix for a radially expanded sleeve of resilient material which may be used as an enclosure of an elongate object such as an electrical cable, comprising a tubular base body having a constant wall thickness through which circumferential space cuts are formed in a helical pattern along the entire length of the base body. One end portion of the helix is separated from the helix into a strip extending from one end of the helix through the support helix and out of the other end thereof where it may be manually grasped. The connection areas between the space cuts are dimensioned so that the support helix can be manually unwound by pulling on the end portion extending through the support helix.

Against this background, the present invention is based on the object of providing a lower-cost and lighter fibre composite component, in particular for aerospace.

According to the invention, this object is achieved by a method with the features of Patent Claim 1 and/or by a moulding core with the features of Patent Claim 8.

Accordingly, a method for producing a fibre composite component, in particular for aerospace, is provided, comprising the following method steps:
forming a moulding core having a spiral configuration for establishing an outer geometry of the moulding core, wherein,
when forming the moulding core, a hollow profile with an outer geometry adapted to the moulding core and with a slit provided in the wall of the hollow profile and extending spirally around its periphery is formed and the slit hollow profile is provided with positional fixing, wherein the slit extending spirally around the periphery penetrates the wall of the hollow profile with the exception of at least three locations arranged such that they are distributed around a circumference of the wall of the hollow profile; at least partly laying at least one semifinished fibre product on the moulding core that is formed, in order to shape at least on moulded portion of the fibre composite component to be produced; and exposing the at least one moulded portion to heat and/or pressure produce the fibre composite component.

Also provided is a moulding core for producing a fibre composite component, in particular a stringer on a base component in aerospace, of a spiral construction.

Consequently, the present invention has the advantage over the approaches mentioned at the beginning that the fibre composite component can be produced by means of a low-cost moulding core. Instead of cost-intensive conventional materials, a moulding core of a spiral construction, which can be removed from the mould in an advantageously easy way, is advantageously used, its easy removal providing weight advantages in comparision with conventional materials that remain in the component.

Advantageous refinements and improvements of the present invention can be found in the subclaims.

In a preferred refinement, it is provided that, when forming the moulding core, a hollow profile which has the outer geometry of the moulding core is provided with a slit extending spirally around its periphery, which slit is made in the wall of the hollow profile and penetrates the wall of the hollow profile completely or with the exception of at least three locations arranged such that they are distributed around the circumference of the wall of the hollow profile. The not completely penetrated locations serve as predetermined breaking points when the moulding core is removed from the mould and for stabilizing the hollow profile. If the hollow profile is completely slit, it is subsequently provided with positional fixing, for example by a lacquer coating, for example in an immersion bath. This may also be performed in the case of a non-slit hollow profile. Such a hollow profile can easily be produced from plastic in a moulding tool. An advantage of this is that the introduction of a peripheral slit allows the hollow profile to be easily removed from the mould by grasping it at one end and drawing it out from the moulded portion, no core component remaining in the moulded portion any longer. As it is drawn out, the hollow profile tears peripherally at the predetermined breaking points and peels off from the core sleeve as a result of the tensile force.

In an alternative embodiment, the moulding core is wound spirally from a wire, preferably a steel wire, with the contour of the moulding core. To retain the shape and prevent it from springing back, the wire can be subjected to a heat treatment. This has the advantageous result that the wire of the moulding core is wound up when it is removed from the mould and can be reused or recycled.

In this case, the spiral moulding core may be provided with an outer coating, for example a brittle plastic mixed with fillers, a filled epoxy resin or a material similar to a lightweight knifing filler, for smoothing out ribbing of the metal wire, whereby smooth surfaces and good characteristics for removal from the mould are obtained. For this purpose, a core sleeve, for example a flexible tube, which completely surrounds the moulding core, may also be additionally used. This likewise produces characteristics for advantageously easy removal from the mould, without the moulded portion that is produced being damaged during removal.

According to a further preferred exemplary embodiment of the invention, reinforcing means are arranged in the region of transitions, to be formed with sharp edges, of the outer geometry of the moulding core to be formed, inside the core sleeve. These reinforcing means, in particular corner profile parts, increase the edge strength, can simplify production and improve the quality of the component.

A release layer, which reduces adhesive attachment of the cured fibre composite component, is preferably applied to the core sleeve. This facilitates removal of the core sleeve after the moulding core has been drawn out.

Semifinished fibre products are to be understood as meaning woven or laid fabrics and fibre mats. These are impregnated with a matrix, for example an epoxy resin, and subsequently cured, for example with the aid of an autoclave.

According to a further preferred development of the invention, the moulding core is arranged on a base component comprising semifinished fibre composite products and/or is at least partially surrounded by semifinished fibre products to form at least one portion of the fibre composite component. Consequently, base parts, for example skin shells, pressure domes, etc. with Ω stringers can be advantageously formed. As an alternative or in addition, separate fibre composite components, which are defined entirely in their form by the moulding core, can also be produced.

The hollow profile may also be advantageously subjected to a relieving internal pressure, with the advantageous result that thin-walled hollow profiles can also be used. This internal pressure advantageously corresponds to the process pressure, that is to say atmospheric pressure when curing in an oven or autoclave pressure.

The invention is explained in more detail below on the basis of the exemplary embodiments represented in the schematic figures of the drawing, in which:
- Figure 1: shows a schematic perspective view of a first exemplary embodiment of a fibre composite component during production as provided by a method according to the invention;
- Figure 2: shows a schematic, general sectional representation of a moulding core of the fibre composite component as shown in Figure 1;
- Figure 3: shows a schematic perspective representation of a first exemplary embodiment of a moulding core according to the invention of the fibre composite component as shown in Figure 1;
- Figure 4: shows a schematic perspective representation of a second exemplary embodiment of a moulding core according to the invention of the fibre composite component as shown in Figure 1; and
- Figure 5: shows a schematic perspective view of the completed fibre composite component as shown in Figure 1 after removal of the moulding cores.

In all the figures of the drawing, elements that are the same or functionally the same have been provided with the same reference numerals, unless otherwise indicated.

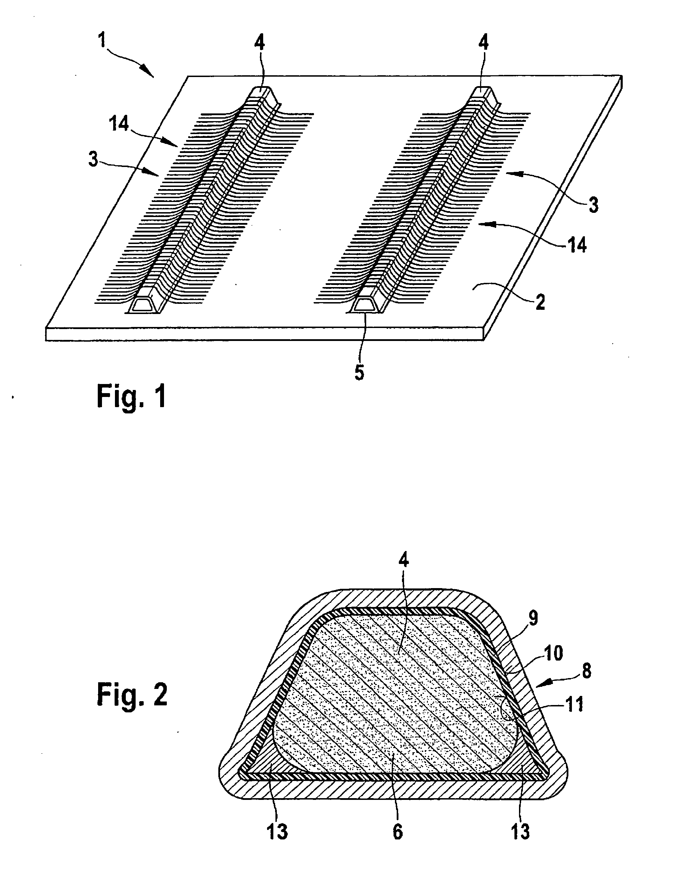

Figure 1 shows a schematic perspective view of a first exemplary embodiment of a fibre composite component 1 during production as provided by a method according to the invention.

This example has two moulding cores 4, the number not being restricted to two. The two moulding cores 4, the production of which is explained further below, are provided with an approximately trapezoidal cross section with their base 5 resting on a base component 2.

The semifinished fibre products 3 are laid on the moulding cores 4. The semifinished fibre products 3 thereby lie with a middle portion on the outer surface of the moulding cores 4 and with their ends on the base component 2, for example on the skin of an aircraft. As a result, two moulded portions 14 of the fibre composite component 1 are formed.

Various production methods may be used for producing the fibre composite component. What is known as the infusion process is preferably chosen here in order to introduce a matrix, that is for example epoxy resin, into the semifinished fibre products 31, 33a, 33b. However, the prepreg process can similarly be used here.

In a further step, the base component 2 is cured with the moulding cores 4 and the semifinished fibre product 3 under the effect of heat and/or pressure in an oven or an autoclave, depending on the process used, whereby the complete fibre composite component 1 is produced. It is important here that the core materials reliably withstands the process temperature and the process pressure.

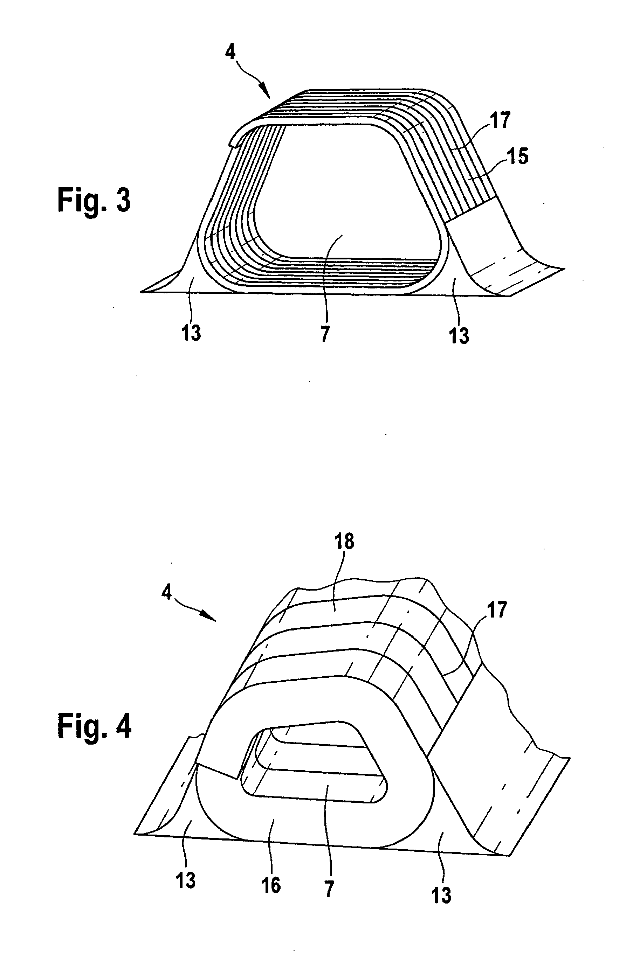

First, the production of the moulding cores 4 is described on the basis of Figures 2 and 4.

Figure 2 shows a schematic, general sectional representation of a moulding core 4 according to the invention of the fibre composite component 1 as shown in Figure 1 in a cross section.

The moulding core 4, the construction of which is discussed in detail further below, has a cross section 6 which is introduced into a moulding tool 8 and in this tool is brought into the desired shape, here an approximately trapezoidal form, for example under heat and pressure. In this example, the core material 7 is surrounded by a core sleeve 9, which completely encloses the moulding core 4 and is suitable for the method that is used for its production and its further working and processing, with regard to temperature and pressure. The core sleeve 9 is produced from a plastic, for example a polyamide and/or a PTFE plastic. It lies with its inner side 11 directly on the surfaces of the moulding core 4, in this example its outer side 10 being coated with a release layer (not shown), which may also comprise an additional sleeve. The release layer serves for the easy release of the moulding core 4 from the moulded portion 14 when it is removed from the mould. To form sharp-edged corner regions, two reinforcing means 13 are provided in this example, which are produced separately and introduced into the moulding core 4. They may also be arranged outside the core sleeve 9.

The moulding core 4 comprises a first or second hollow profile 15, 16, which is provided with a slit 17 extending spirally around its periphery, as represented in Figures 3 and 4. In order to obtain adequate stability of the slit hollow profile 15, 16, at least three locations that are not penetrated are provided on the circumference and tear as predetermined breaking points when the hollow profile 15, 16 is drawn out during removal. These predetermined breaking points may be created for example in such a manner that at least 3 thickened portions of the wall that are distributed over the circumference are provided towards the inside. With a constant slit depth, which corresponds to the rest of the wall, fixing connections then remain over the thickened portions.

The hollow profile 15, 16 comprises an adequately tough and tear-resistant plastic. This produces the advantage that complete removal is made possible when it is removed from the mould.

In a first embodiment, the hollow profile 15 represented in Figure 3 comprises a thin-walled plastic profile. In the production of the moulded portion 14, it is possible for the purposes of stabilization for the interior space of the hollow profile 15 to be subjected to an internal pressure (ambient pressure; autoclave or atmospheric pressure, depending on the curing process) through a core opening 7 by means of a suitable connection device (not shown). As a result, the pressure difference between the interior space and the exterior vacuum that is built up is equal to zero and therefore can no longer deform the hollow profile. It accordingly then only assumes a shaping function. Consequently, the thin-walled nature of the hollow profile 15 can achieve the advantage of saving material. To subject it to an internal pressure, the moulding core 4 is arranged in the moulded portion 14 (Figure 1) in such a way that its ends protrude from the moulded portion 14.

In an alternative embodiment, the hollow profile 15 comprises a wound wire, preferably steel wire. In order to prevent this material from springing back, during and/or after production the wire spiral is subjected to a suitable heat treatment, for example soft annealing or processing in the temperature range of hot forming and subsequent hardening. At the same time, sharp inner radii can be achieved in this way. If a wire with a thickness of, for example, 1.5 mm is used, this inevitably produces outer radii of at least 0.8 mm, which can be made correspondingly sharp by contour smoothing and/or a corner profile.

In Figure 3, reinforcing means 13 in the form of such corner profiles, for example strips of metal or plastic, are used at the lower corners. In this way, the moulding core 4 can be provided with particularly well-formed corner regions, by the reinforcing means 13 being produced in a separate tool. The cross section of the corner profiles in Figure 3 is shown greatly enlarged. They may be arranged outside the core sleeve 9 (not shown in Figure 3) or else inside it (if, unlike the representation in Figure 3, the overall cross section does not have any concave regions that would otherwise be spanned by the sleeve).

The slit 17 or intermediate spaces between the windings or the ribbing of the wound wire are smoothed by a coating. This coating prevents the surface waviness of a wire winding from striking through onto the moulded portion 14. At the same time, this coating brings about fixing of the hollow profile or the wire spiral against twisting and uncoiling. The coating is a brittle material, which flakes off and crumbles away during removal from the mould, so that the operation is not hindered. This material is, for example, a brittle plastic mixed with fillers, a filled epoxy resin or a material similar to a lightweight knifing filler.

Figure 4 shows an alternative, in which the hollow profile 16 is produced from a thick-walled plastic or a rectangular wire. In this case, there is no need for contour smoothing. The winding is in this case produced without any twist, producing a closed outer side 18 without steps or gaps.

The moulding core 4 created in this way is applied to the base component 2 as described above. This state is shown in Figure 1. The moulding core 4 is then covered over with the semifinished fibre product 3 to form the moulded portion 14, as explained above.

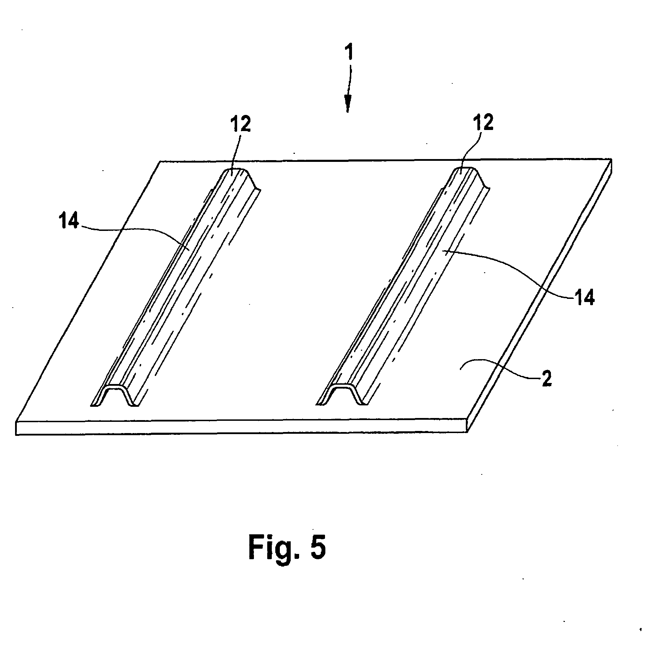

The fibre composite component 1 produced by a curing cycle (not explained in any more detail) is represented in Figure 5 in a perspective view, with moulded portions 14 formed as stringers 20, after removal of the moulding cores 4.

During removal from the mould, the outer end of the cut-into hollow profile 15, 16 or of the wound wire is grasped in an advantageously easy way and drawn out from the moulded portion 14. The removed material can be wound up and reused/recycled. The core sleeve 9 is subsequently likewise drawn out, which can be performed particularly advantageously easily if a release layer is present. The fibre composite component 1 can then be further processed or used directly. In the case of reinforcing means 13, they are likewise drawn out at the same time.

Remains of a fixing material and/or of contour smoothing are removed by the drawing out of the core sleeve 9.

Consequently, a method for producing a fibre composite component, a corresponding moulding core and a corresponding fibre composite component that can achieve a significant reduction in material costs in comparison with the prior art with conventional core materials that remain in it are provided. The moulding core is completely removed, whereby the weight of the fibre composite component can be reduced in comparison with the prior art.

The invention is not restricted to the specific method represented in the figures for producing a fibre composite component 1 for aerospace.

For example, the idea of the present invention can also be applied to fibre composite components in the sports equipment or motor sports sector.

Furthermore, the geometry of the moulding core can be modified in various ways.

Furthermore, it is also possible for a number of moulding cores to be used to form one moulding core, around which semifinished fibre products are placed. The aim of this is to create a more complex geometry by means of the multiplicity of moulding cores. Consequently, more complex fibre composite components can be produced.

The application of the coating for contour smoothing can be performed in an automated manner, as an application close to the final contour, in an installation similar to what is known as a pultrusion press, through which the hollow profile or the winding is drawn. A bending radius of the wire winding can in this way be filled.

A thick-walled spiral profile, for example of an elastomeric plastic, may also be used as the hollow profile.

### List of reference numerals

- 1: fibre composite component
- 2: base plate
- 3: semifinished fibre product
- 4: moulding core
- 5: base of the moulding core
- 6: cross section of the moulding core
- 7: core opening
- 8: moulding tool
- 9: core sleeve
- 10: outer side of the core sleeve
- 11: inner side of the core sleeve
- 12: stringer
- 13: reinforcing means
- 14: moulded portion
- 15: first hollow profile
- 16: second hollow profile
- 17: slit
- 18: outer side

## Claims

1. Method for producing a fibre composite component (1), in particular for aerospace, comprising the following method steps:
- forming a moulding core (4) having a spiral configuration for establishing an outer geometry of the moulding core (4), wherein, when forming the moulding core (4), a hollow profile (15, 16) with an outer geometry adapted to the moulding core (4) and with a slit (17) provided in the wall of the hollow profile (15, 16) and extending spirally around its periphery is formed and the slit hollow profile (15, 16) is provided with positional fixing, wherein the slit (17) extending spirally around the periphery penetrates the wall of the hollow profile (15, 16) with the exception of at least three locations arranged such that they are distributed around the circumference of the wall of the hollow profile (15, 16);
- at least partly laying at least one semifinished fibre product (3) on the moulding core (4) that is formed, in order to shape at least one moulded portion (14) of the fibre composite component (1) to be produced; and
- exposing the at least one moulded portion (14) to heat and/or pressure to produce the fibre composite component (1).

2. Method according to claim 1, **characterized in that** the slit hollow profile (15, 16) is provided with positional fixing, for example with a lacquer coating, for example in an immersion bath.

3. Method according to claim 1 or 2, **characterized in that**, when forming the moulding core (4), reinforcing means are arranged in the region of transitions, to be formed with a sharp edge, of the outer geometry of the moulding core (4) to be formed.

4. Method according to any of the preceding claims, **characterized in that** the moulding core (4) is formed with a core sleeve (9), in particular a flexible tube, which completely surrounds the moulding core (4).

5. Method according to claim 4, **characterized in that** a release layer, which reduces adhesive attachment of the semifinished fibre product and/or a matrix to the core sleeve (9), is applied to the core sleeve (9) of the moulding core (4).

6. Method according to any of the preceding claims, **characterized in that**, during the at least partial laying of at least one semifinished fibre product (3), the moulding core (4) is arranged on a base component (2) comprising semifinished fibre composite products and/or is at least partially surrounded by semifinished fibre products (3) to form the at least one moulded portion (14) of the fibre composite component (1), the interior of the moulding core (4) being subjected to an internal pressure that can be fixed, and the ends of the core sleeve (9) of the moulding core (4) being arranged outside the moulded portion (14).

7. Method according to any of the preceding claims, **characterized in that**, after exposing the fibre composite component (1) to be produced to heat and/or pressure, removal of the moulding core (4) is performed by drawing out one or both ends of the spiral construction and optionally winding it up.

8. Moulding core (4) for producing a fibre composite component (1), in particular a stringer (12) on a base component (2) in aerospace, of a spiral construction, **characterized in that** the moulding core (4) is a hollow profile (15, 16) with an outer geometry adapted to the moulding core (4) and with a slit (17) provided in the wall of the hollow profile (15, 16) and extending spirally around its periphery; and **in that** the slit hollow profile (15, 16) is provided with positional fixing, wherein the slit (17) extending spirally around the periphery, penetrates the wall of the hollow profile (15, 16) **characterized in that** the slit penetrates the wall of the hollow profile with the exception of at least three locations arranged such that they are distributed around the circumference of the wall of the hollow profile (15, 16).

9. Moulding core (4) according to claim 8, **characterized in that**, to form the positional fixing, the slit hollow profile (15, 16) is provided with a coating, for example a lacquer coating.

10. Moulding core (4) according to claim 8 or 9, **characterized in that** the moulding core (4) is provided with a core sleeve (9), for example a flexible tube, enclosing it.

11. Moulding core (4) according to claim 10, **characterized in that** the core sleeve (9) has a release layer, for example in the form of a further sleeve, which forms an outer surface of the moulding core (4).

## Patentansprüche

1. Verfahren zum Herstellen einer Faserverbundkomponente (1), insbesondere für die Luft- und Raumfahrt, das die folgenden Verfahrensschritte umfasst:
- Bilden eines Formwerkzeugkerns (4) mit einer spiralförmigen Konfiguration zum Ausbilden einer äußeren Geometrie des Formwerkzeugkerns (4), wobei, beim Bilden des Formwerkzeugkerns (4), ein Hohlprofil (15, 16) mit einer äußeren Geometrie, die an den Formwerkzeugkern (4) angepasst ist, und mit einem Schlitz (17), der in der Wand des Hohlprofils (15, 16) ausgebildet ist und sich spiralförmig um seinen Umfangsrand erstreckt, ausgebildet wird und das Schlitz-Hohlprofil (15, 16) mit einer Positionsfixierung versehen wird, wobei der Schlitz (17), der sich spiralförmig um den Umfangsrand erstreckt, die Wand des Hohlprofils (15, 16) durchdringt, mit Ausnahme mindestens dreier Stellen, die so angeordnet sind, dass sie um den Umfang der Wand des Hohlprofils (15, 16) herum verteilt sind;
- mindestens teilweises Legen mindestens eines halbfertigen Faserprodukts (3) auf den ausgebildeten Formwerkzeugkern (4), um mindestens einen geformten Abschnitt (14) der herzustellenden Faserverbundkomponente (1) zu formen; und
- Inkontaktbringen des mindestens einen geformten Abschnitts (14) mit Wärme und/oder Druck, um die Faserverbundkomponente (1) herzustellen.

2. Verfahren nach Anspruch 1, **dadurch gekennzeichnet, dass** das Schlitz-Hohlprofil (15, 16) mit einer Positionsfixierung, zum Beispiel mit einem Lacküberzug, zum Beispiel in einem Tauchbad, versehen wird.

3. Verfahren nach Anspruch 1 oder 2, **dadurch gekennzeichnet, dass**, beim Bilden des Formwerkzeugkerns (4), Verstärkungsmittel in der Region von Übergängen, die mit einer scharfen Kante zu versehen sind, der äußeren Geometrie des zu bildenden Formwerkzeugkerns (4) angeordnet werden.

4. Verfahren nach einem der vorangehenden Ansprüche, **dadurch gekennzeichnet, dass** der Formwerkzeugkern (4) mit einer Kernhülse (9) ausgebildet wird, insbesondere einer flexiblen Röhre, die den Formwerkzeugkern (4) vollständig umgibt.

5. Verfahren nach Anspruch 4, **dadurch gekennzeichnet, dass** eine Trennschicht, welche die Haftkraft des halbfertigen Faserprodukts und/oder einer Matrix an der Kernhülse (9) reduziert, auf die Kernhülse (9) des Formwerkzeugkerns (4) aufgebracht wird.

6. Verfahren nach einem der vorangehenden Ansprüche, **dadurch gekennzeichnet, dass**, während des mindestens teilweisen Legens mindestens eines halbfertigen Faserprodukts (3), der Formwerkzeugkern (4) auf einer Basiskomponente (2) angeordnet wird, die halbfertige Faserverbundprodukte umfasst, und/oder mindestens teilweise von halbfertigen Faserprodukten (3) umgeben wird, um den mindestens einen geformten Abschnitt (14) der Faserverbundkomponente (1) zu bilden, wobei das Innere des Formwerkzeugkerns (4) einem Innendruck ausgesetzt wird, der fixiert werden kann, und die Enden der Kernhülse (9) des Formwerkzeugkerns (4) außerhalb des geformten Abschnitts (14) angeordnet werden.

7. Verfahren nach einem der vorangehenden Ansprüche, **dadurch gekennzeichnet, dass**, nach dem Inkontaktbringen der herzustellenden Faserverbundkomponente (1) mit Wärme und/oder Druck, das Entfernen des Formwerkzeugkerns (4) ausgeführt wird, indem ein oder beide Enden der spiralförmigen Konstruktion herausgezogen und optional aufgewickelt werden.

8. Formwerkzeugkern (4) zum Herstellen einer Faserverbundkomponente (1), insbesondere einer Längsversteifung (12) auf einer Basiskomponente (2) in der Luft- und Raumfahrt, von einer spiralförmigen Konstruktion, **dadurch gekennzeichnet, dass** der Formwerkzeugkern (4) ein Hohlprofil (15, 16) ist, das eine äußere Geometrie hat, die an den Formwerkzeugkern (4) angepasst ist, und einen Schlitz (17) hat, der in der Wand des Hohlprofils (15, 16) ausgebildet ist und sich spiralförmig um seinen Umfangsrand erstreckt; und dass das Schlitz-Hohlprofil (15, 16) mit einer Positionsfixierung versehen ist, wobei der Schlitz (17), der sich spiralförmig um den Umfangsrand herum erstreckt, die Wand des Hohlprofils (15, 16) durchdringt, **dadurch gekennzeichnet, dass** der Schlitz die Wand des Hohlprofils mit Ausnahme mindestens dreier Stellen durchdringt, die so angeordnet sind, dass sie um den Umfang der Wand des Hohlprofils (15, 16) herum verteilt sind.

9. Formwerkzeugkern (4) nach Anspruch 8, **dadurch gekennzeichnet, dass**, zum Bilden der Positionsfixierung, das Schlitz-Hohlprofil (15, 16) mit einer Beschichtung, zum Beispiel einem Lacküberzug, versehen wird.

10. Formwerkzeugkern (4) nach Anspruch 8 oder 9, **dadurch gekennzeichnet, dass** der Formwerkzeugkern (4) mit einer Kernhülse (9), zum Beispiel einer flexiblen Röhre, die ihn umgibt, versehen wird.

11. Formwerkzeugkern (4) nach Anspruch 10, **dadurch gekennzeichnet, dass** die Kernhülse (9) eine Trennschicht hat, zum Beispiel in Form einer weiteren Hülse, die eine Außenfläche des Formwerkzeugkerns (4) bildet.

## Revendications

1. Procédé de fabrication d'un composant composite fibreux (1), en particulier pour l'industrie aérospatiale, comprenant les étapes de procédé suivantes :
- former un noyau de moulage (4) ayant une configuration spiralée pour établir une géométrie externe du noyau de moulage (4), dans lequel, lors de la formation du noyau de moulage (4), un profilé creux (15, 16) avec une géométrie externe adaptée au noyau de moulage (4) et avec une fente (17) prévue dans la paroi du profilé creux (15, 16) et s'étendant en forme de spirale autour de sa périphérie est formé et le profilé creux fendu (15, 16) est prévu avec une fixation positionnelle, dans lequel la fente (17) s'étendant en spirale autour de la périphérie pénètre dans la paroi du profilé creux (15, 16) à l'exception d'au moins trois emplacements agencés de telle sorte qu'ils sont répartis autour de la circonférence de la paroi du profilé creux (15, 16) ;
- poser au moins partiellement au moins un produit fibreux semi-fini (3) sur le noyau de moulage (4) qui est formé, en vue du façonnage d'au moins une partie moulée (14) du composant composite fibreux (1) à fabriquer ; et
- exposer au moins une partie moulée (14) à la chaleur et/ou à une pression pour fabriquer le composant composite fibreux (1).

2. Procédé selon la revendication 1, **caractérisé en ce que** le profilé creux fendu (15, 16) est prévu avec une fixation positionnelle, par exemple avec une couche de vernis, par exemple dans un bain à immersion.

3. Procédé selon la revendication 1 ou 2, **caractérisé en ce que**, lors de la formation du noyau de moulage (4), des moyens de renfort sont agencés au niveau des transitions, qui doivent être formées avec une arête vive, de la géométrie externe du noyau de moulage (4) devant être formé.

4. Procédé selon une quelconque des revendications précédentes, **caractérisé en ce que** le noyau de moulage (4) est formé avec une chemise de noyau (9), en particulier un tube flexible, qui entoure entièrement le noyau de moulage (4).

5. Procédé selon la revendication 4, **caractérisé en ce qu'**une couche anti-adhésive, qui réduit la fixation adhésive du produit fibreux semi-fini et/ou d'une matrice sur la chemise de noyau (9), est appliquée sur la chemise (9) du noyau de moulage (4).

6. Procédé selon une quelconque des revendications précédentes, **caractérisé en ce que**, pendant la pose au moins partielle d'au moins un produit fibreux semi-fini (3), le noyau de moulage (4) est agencé sur un composant de base (2) comprenant des produits composites fibreux semi-finis et/ou est au moins partiellement entouré par des produits fibreux semi-finis (3) pour former au moins une partie moulée (14) du composant composite fibreux (1), l'intérieur du noyau de moulage (4) étant soumis à une pression interne qui peut être fixée, et les extrémités de la chemine (9) du noyau de moulage (4) étant agencées en dehors de la partie moulée (14).

7. Procédé selon une quelconque des revendications précédentes, **caractérisé en ce que**, après l'exposition du composant composite fibreux (1) devant être produit à la chaleur et/ou à une pression, l'enlèvement du noyau de moulage (4) est réalisé en tirant une extrémité ou les deux extrémités de la construction spiralée et, en option, en la ou les rembobinant.

8. Noyau de moulage (4) destiné à fabriquer un composant composite fibreux (1), en particulier une lisse (12) sur un composant de base (2) dans l'industrie aérospatiale, ayant une construction spiralée, **caractérisé en ce que** le noyau de moulage (4) est un profilé creux (15, 16) avec une géométrie externe adaptée au noyau de moulage (4) et avec une fente (17) prévue dans la paroi du profilé creux (15, 16) et s'étendant en spirale autour de sa périphérie ; et **en ce que** le profilé creux fendu (15, 16) est prévu avec une fixation positionnelle, dans lequel la fente (17) s'étendant en spirale autour de la périphérie pénètre dans la paroi du profilé creux (15, 16), **caractérisé en ce que** la fente pénètre dans la paroi du profilé creux à l'exception d'au moins trois emplacements agencés de telle sorte qu'ils sont répartis autour de la circonférence de la paroi du profilé creux (15, 16).

9. Noyau de moulage (4) selon la revendication 8, **caractérisé en ce que**, pour former la fixation positionnelle, le profilé creux fendu (15, 16) est prévu avec un revêtement, par exemple une couche de vernis.

10. Noyau de moulage (4) selon la revendication 8 ou 9, **caractérisé en ce que** le noyau de moulage (4) est prévu avec une chemise de noyau (9), par exemple un tube flexible, qui l'enferme.

11. Noyau de moulage (4) selon la revendication 10, **caractérisé en ce que** la chemise de noyau (9) présente une couche anti-adhésive, par exemple sous la forme d'une autre chemise, qui forme une surface externe du noyau de moulage (4).
